# FASCICULE DE BREVET EUROPEEN

(11) **EP 0 504 778 B1**
(45) Date de publication et mention de la délivrance du brevet: **24.05.1995**
(21) Numéro de dépôt: 92104513.4
(22) Date de dépôt: 16.03.1992
(51) Int. Cl.: C01G 3/00, C01G 29/00, C01G 30/00

(54) **Procédé d'obtention de précurseurs de céramiques supraconductrices à haute température critique**
Verfahren zur Herstellung von Vorläufer für Hochtemperatur supraleitende keramische Materialien
Process for obtaining precursors for high temperature superconductor ceramics

(30) Priorité: 18.03.1991 FR 9103260
(43) Date de publication de la demande: 23.09.1992
(73) Titulaire: ALCATEL ALSTHOM COMPAGNIE GENERALE D'ELECTRICITE, 75382 Paris Cédex 08 (FR)
(72) Inventeur: Duperray, Gérard, F-91290 La Norville (FR); Ducatel, Françoise, F-78830 Bonnelles (FR)
(74) Mandataire: Weinmiller, Jürgen

(56) Documents cités:
- US-A- 4 895 832
- JAPANESE JOURNAL OF APPLIED PHYSICS. vol. 26, no. 5, Mai 1987, TOKYO JP KEIJI KANEKO: 'ON THE COPRECIPITATION METHOD FOR THE PREPARATION OF HIGH Tc M-X-CU-O (M=BA,SE,X=LA,Y) SYSTEM'
- PHYSICA C. vol. 157, no. 1, 1 Janvier 1989, AMSTERDAM NL pages 108 - 114; YU ZHANG: 'THE SYNTHESIS OF SUPERCONDUCTING BISMUTH COMPOUNDS VIA OXALATE COPRECIPITATION'
- CHEMICAL ABSTRACTS, vol. 113, no. 12, 17 Septembre 1990, Columbus, Ohio, US; abstract no. 107249S, LIU LINGGING: 'PREPARATION OF SUPERCONDUCTORS OF THE YTTRIUM BARIUM COPPER OXIDE SYSTEM BY THE OXALATE METHOD'

## Description

La présente invention concerne un procédé d'obtention de précurseurs de céramiques supraconductrices à haute température critique, destiné à permettre la synthèse de ces céramiques supraconductrices dans des conditions optimales de réactivité, de rendement et d'homogénéité.

On connaît un procédé consistant à préparer, avant la synthèse proprement dite, un mélange de précurseurs à l'état de grains très fins (de diamètre inférieur à 0,3 »m) par coprécipitation ; on part d'une solution des cations désirés et on les précipite sous forme de sels insolubles dans l'eau tels que oxalates, carbonates, tartrates, citrates.... Le précipité ainsi obtenu est alors filtré, lavé et calciné entre 500°C et 600°C. Il en résulte une masse spongieuse de carbonates ou d'oxydes des cations qui conduit, après un court broyage, à une poudre constituée d'agglomérats de grains élémentaires très fins et dont la composition chimique est très homogène à l'échelle microscopique ; autrement dit, chaque agglomérat possède la stoechiométrie voulue. Ce procédé apporte de ce point de vue un gros progrès vis-à-vis d'un broyage d'oxydes ou de carbonates préparés chacun séparément.

Toutefois, en pratique un tel procédé appliqué à la coprécipitation des précurseurs des céramiques supraconductrices à base d'yttrium ou de bismuth pose des problèmes comme l'indiquent les articles ci-dessous :
- Mat. Res. Bull vol 23, 1988, 1273 - F. Caillaud
- Mat. Lett. vol 2,3, 1990, 105 - C.Y. Shei.

En effet les solutions de travail contiennent un certain nombre d'anions gênants et il s'y forme des complexes solubles susceptibles de réduire de manière très néfaste le rendement de précipitation.

A titre d'exemple, on observe qu'en milieu acide apparaissent des complexes assez solubles des alcalinoterreux tels que 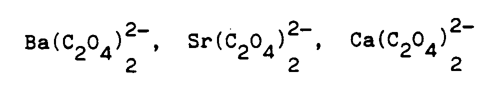
De même en présence d'ammonium apparaît un complexe de cuivre très soluble

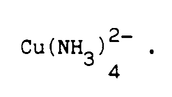

Par ailleurs, si le pH est supérieur à 2, le bismuth se redissout sous forme d'ion bismuthite Bi₂O₄²⁻
Par conséquent, si, à cause des alcalinoterreux, on neutralise la solution de travail avec une base volatile non polluante, telle que l'ammoniaque ou une amine, on ne peut précipiter totalement le cuivre et le bismuth, et réciproquement si on acidifie la solution de travail. Quel que soit le domaine de pH de la solution mise en oeuvre, le précipité qui apparaît présente des écarts à la stoechiométrie désirée et les phases supraconductrices synthétisées sont impures. Or on sait que ces impuretés induisent une dégradation inacceptable des propriétés supraconductrices, telle que l'abaissement de la température critique et du courant de transport.

Pour éviter cet inconvénient les utilisateurs du procédé, comme cela est décrit en détail dans les articles mentionnés plus haut, effectuent d'une part un contrôle précis du pH de la solution pendant la coprécipitation de façon à se placer dans les conditions où le rendement est maximum ; par ailleurs ils ajoutent dès le départ à la solution de travail un excès des cations incapables d'être précipités complètement. Mais il s'avère très difficile de préjuger de la quantité de cations à mettre en excès, car les écarts de rendement de précipitation dépendent d'un grand nombre de paramètres difficiles à maîtriser simultanément, surtout dans des conditions de fabrication industrielle : pH, température, concentration de chacune des espèces, cinétique de la précipitation......

La présente invention a pour but de mettre en oeuvre un procédé permettant d'obtenir l'ensemble des précurseurs avec la stoechiométrie désirée, et de manière reproductible, même dans des conditions de mise en oeuvre industrielles.

La présente invention a pour objet un procédé d'obtention de précurseurs de céramiques supraconductrices à haute température critique par précipitation de sels insolubles dans l'eau, caractérisé par le fait qu'il comporte les étapes suivantes :
- on part d'une solution de sels solubles où les cations se trouvent dans les proportions stoechiométriques de la phase supraconductrice désirée,
- on réalise une première précipitation complète à une première valeur de pH d'une première série de cations préalablement choisis,
- on filtre le premier précipité obtenu, on le lave et on conserve le filtrat,
- on donne au pH dudit filtrat une seconde valeur et on précipite les cations résiduels,
- on filtre le second précipité,
- on homogénéise le premier et le second précipités,
- on sèche le produit obtenu, on le calcine et on le broie.

Les cations de ladite première série peuvent être les cations les plus prioritaires vis-à-vis de ladite phase supraconductrice à obtenir.

Selon un premier mode de réalisation avantageux, on part d'une solution de nitrates où les cations se trouvent dans les proportions stoechiométriques de la phase concernée ; on réalise une première précipitation par ajout d'oxalate d'ammonium ou d'amine avec une première valeur de pH inférieure ou égale à 3 ; on élève ensuite la valeur du pH à une seconde valeur supérieure à 3 et on précipite complètement les cations résiduels sous forme d'oxalates.

La présente invention s'applique notamment aux phases supraconductrices suivantes pour lesquelles les cations à précipiter sont Yttrium^{III}, Baryum^{II}, Cuivre^{II}, Calcium^{II} :
- Y₁Ba₂Cu₃O₇
- Y₁Ba₂Cu₄O₈
- Y₁₋ₓ Caₓ Ba₂ Cu₄ O_{7,5-x} avec 0,05 < x < 0,15
- Y₂ Ba₄ Cu₇ O₁₅
Dans ce cas ledit premier précipité contient la totalité des cations d'yttrium et de cuivre et la majeure partie des cations de baryum et ledit second précipité contient les cations résiduels de baryum.

Elle s'applique également aux phases supraconductrices suivantes pour lesquelles les cations à précipiter sont
Bismuth^{III}, Strontium^{II}, Calcium^{II}, Cuivre^{II} :
- Bi₂ Sr₂ Ca₁ Cu₂ O₈
- Bi₂ Sr₂ Ca₂ Cu₃ O₈
Dans ce cas ledit premier précipité contient la totalité des cations de bismuth, de cuivre et la majeure partie des cations de strontium et de calcium, tandis que le second précipité contient les cations résiduels de strontium et de calcium.

Pour la phase Bi_{(2-y)} Pb_{y} Sr₂ Ca₂ Cu₃ O_{10-y/2} avec 0,3 < y < 0,8, où une partie du bismuth est substituée par du plomb, ledit premier précipité contient la totalité des cations de bismuth, de cuivre et de plomb et la majeure partie des cations de strontium et de calcium, tandis que le second précipité contient les cations résiduels de strontium et de calcium.

Pour la phase Bi_{(2-y)} Sb_{y} Sr₂ Ca₂ Cu₃ O_{10-y} avec 0,3 < y < 0,8, où une partie du bismuth est substituée par le l'antimoine, ledit premier précipité contient la totalité des cations de bismuth, de cuivre et d'antimoine, et la majeure partie des cations de strontium et de calcium, tandis que le second précipité contient les cations résiduels de strontium et de calcium.

Selon un autre mode de réalisation, applicable essentiellement aux phases supraconductrices au bismuth précitées, on part de la même solution où les cations se trouvent dans les proportions stoechiométriques de la phase désirée ; on réalise la première précipitation à une première valeur de pH au soins égale à 3 par ajout d'oxalate d'ammonium ou d'amine ; on acidifie le filtrat pour précipiter les cations résiduels.

Le premier précipité contient ainsi la totalité du strontium et du calcium, et la majeure partie du bismuth et du cuivre, tandis que le second précipité contient le bismuth et pratiquement tout le cuivre résiduels.

Dans toutes les variantes du procédé selon l'invention, on renonce à la coprécipitation idéale de l'ensemble des cations et on parvient à privilégier le rendement de précipitation.

Le second précipité, proportionnellement très inférieur en quantité par rapport au premier est ajouté à ce dernier ; le tout peut être dispersé dans un peu d'eau et homogénéisé par un moyen convenable tel que ultra-sons, agitation au turbula, dispersion dans un broyeur à boulets. Une dernière filtration peut alors être nécessaire pour récupérer la totalité des oxalates. Le produit obtenu est séché à l'air vers 100°C et calciné pendant une heure sous air entre 500°C et 600°C.

La masse spongieuse résultante est constituée d'oxydes métalliques, sauf pour les alcalinoterreux qui sont à l'état de carbonates. Ladite masse spongieuse est broyée pendant une heure à sec et tamisée. On obtient une poudre d'agglomérats de taille comprise entre 0,3 »m et 10 »m qui convient aux diverses mises en forme des céramiques supraconductrices.

Cette poudre peut être utilisée directement et soumise à un pressage uniaxial ou isostatique ; elle peut être mise en oeuvre après malaxage avec un polymère par un procédé d'extrusion ou d'injection ; elle peut être broyée dans un liquide avec ajout d'un liant soluble et être ensuite soumise à une phase de coulage-sérigraphie.

Dans tous les cas, la céramique obtenue après la synthèse thermique classique est bien stoechiométrique, ce qui est un gage de bonnes performances supraconductrices.

D'autres caractéristiques et avantages de la présente invention apparaîtront au cours de la desciption suivante de modes de réalisation donnés à titre illustratif mais nullement limitatif.

### EXEMPLE 1

On met en suspension dans 100 ml d'eau : 11,29 g de Y₂O₃ ; 39,47 g de BaCO₃ ; 23, 86 g de CuO. On ajoute sous agitation 158 g de HNO₃ à 52%. On chauffe à 80°C après dilution à 500 ml : on obtient une solution bleue, limpide.

On dissout séparément 100 g d'acide oxalique à 2 H₂O dans 50 ml d'eau à 80°C : on neutralise avec précaution cette solution avec 163 g de triéthylamine jusqu'à obtention d'une solution limpide.

On ajoute lentement la solution bleue à celle d'oxalate de triéthylamine sous forte agitation à 80°C. On ajuste le pH à 2,5 par ajout de triéthylamine et on refroidit sous agitation jusqu'à 10°C. On obtient un premier précipité bleuté abondant où se trouvent la totalité de l'yttrium et du cuivre et la majorité du baryum.

On filtre, on lave le premier précipité en conservant le filtrat. On neutralise le filtrat jusqu'à pH 5 avec de l'ammoniaque ; on obtient un second précipité blanc où se trouve le baryum résiduel. On filtre, on lave le second précipité.

On mélange les deux précipités en les mettant en suspension dans 100 ml d'eau, en appliquant 30 minutes d'ultra-sons et 1 heure d'agitation au turbula dans un flacon de polyéthylène contenant 2 boulets en PTFE.
On filtre et on lave le précipité ainsi homogénéisé, on le sèche à l'air dans une étuve à 120°C puis on calcine une heure à 600°C sous air. On broie la masse spongieuse obtenue pendant 1 heure à sec dans une jarre en corindon contenant deux boulets. On tamise à 250 »m

Ce matériau, pressé sous forme de barreau et traité thermiquement dans les conditions citées notamment dans le brevet français FR-A-89 08822, conduit à la phase supraconductrice Y₁Ba₂Cu₃O₇₋ₓ orthorhombique.

### EXEMPLE 2

On met en suspension dans 100 ml d'eau : 11,29 g de Y₂O₃ ; 39,37 g de BaCO₃ ; 31,82 g de CuO. On ajoute sous agitation 182 g d'HNO₃ à 52%. On chauffe à 80°C après dilution à 500 ml. On obtient une solution bleue limpide.

On dissout séparément 120 g d'acide oxalique à 2H₂O dans 60 ml d'eau à 80°C : on neutralise avec précaution cette solution avec 195 g de triéthylamine jusqu'à obtention d'une solution limpide.

La suite des opérations est identique à celle indiquée dans l'exemple 1.

Le premier précipité contient la totalité de l'yttrium et du cuivre et la majorité du baryum.

Le second précipité contient le baryum résiduel.

Le matériau obtenu, traité dans les conditions citées dans le brevet français FR-A-91 01892, conduit à la phase supraconductrice pure Y₁Ba₂Cu₄O₈. Pour cela, on réalise d'abord la synthèse de la phase Y₁Ba₂Cu₃O₇ orthorhombique, l'excès de CuO se trouvant alors dispersé dans cette phase ; puis l'on effectue un traitement thermique sous 1 bar d'oxygène pur entre 800°C et 850°C pendant une durée comprise entre 60 et 100 Heures. L'usage de précurseurs précipités selon le procédé de la présente invention contribue à obtenir sous pression atmosphérique d'oxygène cette phase 2:4:8 qui est habituellement obtenue sous des pressions égales ou supérieures à 50 bars. La raison en est que le cuivre, entièrement précipité dès la première étape, se trouve dispersé de façon optimale parmi les précurseurs et diffuse plus rapidement dans la structure mère Y₁Ba₂Cu₃O₇ pour former Y₁Ba₂Cu₄O₈.

### EXEMPLE 3

On met en suspension dans 100 ml d'eau : 18,64 g de Bi₂O₃ ; 4,46 g de PbO ; 14,76 g de SrCO₃ ; 10,00 g de CaCO₃ et 11,93 g de CuO. On ajoute sous agitation 172 g d'HNO₃ à 52%. On chauffe à 80°C, on obtient une solution bleue limpide.

On dissout séparément 80 g d'acide oxalique à 2H₂O dans 50 ml d'eau à 80°C ; on neutralise avec précaution cette solution avec 130 g de triéthylamine jusqu'à obtention d'une solution limpide.

On ajoute lentement la solution bleue à celle d'oxalate de triéthylamine sous forte agitation à 80°C. On ajuste le pH à 2,2 par ajout de triéthylamine et on refroidit sous agitation jusqu'à 10°C en maintenant ce pH.

La suite des opérations est identique à celle indiquée dans l'exemple 1.

Le premier précipité contient la totalité du bismuth, du plomb et du cuivre, et la majorité du strontium et du calcium.

Le second précipité contient le strontium et le calcium résiduels.

Le matériau obtenu, pressé sous forme de tube de diamètre intérieur 9mm, de diamètre extérieur 11mm et de longueur 7cm, est traité thermiquement à une température inférieure à 850°C ; il conduit à la phase supraconductrice majoritaire Bi_{1,6}Pb_{0,4}Sr₂Ca₂Cu₃O₁₀. L'usage de précurseurs précipités selon le procédé de l'invention contribue à augmenter dans le produit final la proportion de cette phase, dont la température critique est de 110K. L'obtention sélective de cette phase, favorisée par une température de synthèse basse comprise entre 835 et 850°C, nécessite l'emploi d'un mélange de précurseurs très réactifs si on ne veut pas allonger le temps de traitement de façon prohibitive ; cette condition est remplie par le matériau obtenu selon le procédé de l'invention.

### EXEMPLE 4

Il est identique à l'exemple 3, sauf en ce qui concerne la valeur du pH à la fin de la première précipitation. On opère à pH 3 et on maintient cette valeur durant tout le refroidissement sous agitation jusqu'à 10°C, on obtient un premier précipité bleu pâle abondant contenant la totalité du strontium, du calcium et du plomb et la majeure partie du bismuth et du cuivre ; mais le filtrat est lui aussi bleu indiquant le passage en solution de cations Cu²⁺ ; cet inconvénient est la contrepartie à payer pour obtenir la coprécipitation totale du strontium et du calcium à la première étape.

Le filtrat est acidifié avec une solution d'acide oxalique jusqu'à pH 0,8 ; on obtient un second précipité bleu, contenant tout le bismuth et presque tout le cuivre résiduel, qu'on mélange au premier comme dans les exemples précédents. Le tout est traité de manière identique jusqu'à obtention du mélange de précurseurs final.

Le deuxième filtrat contient néanmoins 175 mg/l de cations Cu²⁺ irrécupérables, entraînant ainsi un défaut de stoechiométrie de cuivre inférieur à 2%.

Le matériau obtenu, traité thermiquement dans les conditions indiquées dans l'exemple 3, s'est révélé plus riche en phase Bi_{1,6}Pb_{0,4}Sr₂Ca₂Cu₃O₁₀ car le calcium, entièrement coprécipité dès la première étape, a ainsi mieux diffusé dans la structure mère Bi₂Sr₂Ca₁Cu₂O₈ pour former une phase plus riche en calcium à température critique élevée (110K).

Bien entendu l'invention n'est pas limitée aux exemples qui viennent d'être décrits ; en particulier les sels solubles peuvent être des acétates ou des formiates.

## Revendications

1. Procédé d'obtention de précurseurs de céramiques supraconductrices à haute température critique, par précipitation de sels insolubles dans l'eau, caractérisé par le fait qu'il comporte les étapes suivantes :
- on part d'une solution de sels solubles où les cations se trouvent dans les proportions stoechiométriques de la phase supraconductrice désirée,
- on réalise une première précipitation complète d'une première série de cations à une première valeur de pH,
- on filtre le premier précipité obtenu, on le lave et on conserve le filtrat,
- on donne au pH dudit filtrat une seconde valeur et on précipite les cations résiduels,
- on filtre le second précipité,
- on homogénéise le premier et le second précipités,
- on sèche le produit obtenu, on le calcine et on le broie.

2. Procédé selon la revendication 1, caractérisé par le fait que l'on part d'une solution de sels solubles où lesdits cations se trouvent dans les proportions stoechiométriques de ladite phase supraconductrice désirée, que l'on réalise la première précipitation par ajout d'oxalate d'ammonium ou d'amine avec une première valeur de pH inférieure ou égale à 3, que l'on donne au pH dudit filtrat une seconde valeur supérieure à 3 et que l'on précipite alors complètement lesdits cations résiduels sous forme d'oxalates.

3. Procédé selon la revendication 2, caractérisé par le fait que, pour les phases supraconductrices :
- Y₁Ba₂Cu₃O₇
- Y₁Ba₂Cu₄O₈
- Y₁₋ₓCaₓBa₂Cu₄O_{7,5-x} avec 0,05 < x < 0,15
- Y₂Ba₄Cu₇O₁₅
ledit premier précipité contient la totalité des cations d'yttrium et de cuivre et la majeure partie des cations de baryum et que ledit second précipité contient les cations résiduels de baryum.

4. Procédé selon la revendication 2, caractérisé par le fait que, pour les phases supraconductrices :
- Bi₂Sr₂Ca₁Cu₂O₈
- Bi₂Sr₂Ca₂Cu₃O₈
ledit premier précipité contient la totalité des cations de bismuth et de cuivre et la majeure partie des cations de strontium et de calcium, tandis que le second précipité contient les cations résiduels de strontium et de calcium.

5. Procédé selon la revendication 2, caractérisé par le fait que, pour la phase supraconductrice :
Bi_{(2-y)}Pb_{y}Sr₂Ca₂Cu₃O_{10-y/2} avec 0,3 < y < 0,8
ledit premier précipité contient la totalité des cations de bismuth, de cuivre et de plomb et la majeure partie des cations de strontium et de calcium, tandis que le second précipité contient les cations résiduels et strontium et de calcium.

6. Procédé selon la revendication 2, caractérisé par le fait que, pour la phase supraconductrice :
Bi_{(2-y)}Sb_{y}Sr₂Ca₂Cu₃O_{10-y} avec 0,3 < y < 0,8,
ledit premier précipité contient la totalité des cations de bismuth, de cuivre et d'antimoine, et la majeure partie des cations de strontium et de calcium, tandis que le second précipité contient les cations résiduels de strontium et de calcium.

7. Procédé selon la revendication 1, caractérisé par le fait que, pour les phases supraconductrices :
- Bi₂Sr₂Ca₁Cu₂O₈
- Bi₂Sr₂Ca₂Cu₃O₈,
avec éventuellement substitution d'une certaine quantité de bismuth par du plomb ou de l'antimoine, on part d'une solution de sels solubles où lesdits cations se trouvent dans les proportions stoechiométriques de la phase désirée, on réalise ladite première précipitation à une première valeur de pH au moins égale à 3 par ajout d'oxalate d'ammonium ou d'amine, ledit premier précipité contenant au moins la totalité des cations de strontium et de calcium et la majeure partie du bismuth et du cuivre, et que l'on acidifie ensuite ledit filtrat par ajout d'acide oxalique pour obtenir ledit second précipité avec lesdits cations résiduels.

8. Procédé selon l'une des revendications précédentes, caractérisé par le fait que lesdits sels solubles sont des nitrates, des acétates, ou des formiates.

## Claims

1. Process for obtaining precursors for high critical temperature superconductor ceramics by precipitating salts which are insoluble in water characterised in that it comprises the following stages:
- a starting solution of soluble salts is prepared in which the cations are in the stoichiometric proportions of the required superconductor phase,
- a first full precipitation is carried out of a first series of cations at a first value of pH,
- the first precipitate obtained is filtered out and washed and the filtrate is retained,
- the pH of said filtrate is changed to a second value and the residual cations are precipitated,
- the second precipitate is filtered,
- the first and second precipitates are homogenised,
- the product obtained is dried, calcined, and ground.

2. Process according to claim 1 characterised in that, starting with a solution of soluble salts in which said cations are in the stoichiometric proportions of said required superconductor phase, the first precipitation is carried out by adding an amine or ammonium oxalate with a first pH value less than or equal to 3, the pH of said filtrate is raised to a second value greater than 3 and said residual cations are then precipitated completely in the form of oxalates.

3. Process according to claim 2 characterised in that, for the superconductor phases:
- Y₁Ba₂Cu₃O₇,
- Y₁Ba₂Cu₄O₈,
- Y₁₋ₓCaₓBa₂Cu₄O_{7.5-x} where 0.05 < x < 0.15,
- Y₂Ba₄Cu₇O₁₅.
said first precipitate contains all of the yttrium and copper cations and the major part of the barium cations and said second precipitate contains the residual barium cations.

4. Process according to claim 2 characterised in that, for the superconductor phases:
- Bi₂Sr₂Ca₁Cu₂O₈,
- Bi₂Sr₂Ca₂Cu₃O₈.
said first precipitate contains all of the bismuth and copper cations and the major part of the strontium and calcium cations and the second precipitate contains the residual strontium and calcium cations.

5. Process according to claim 2 characterised in that, for the superconductor phase Bi_{(2-y)}Pb_{y}Sr₂Ca₂Cu₃O_{10-y/2} with 0.3 < y < 0.8 said first precipitate contains all of the bismuth, copper and lead cations and the major part of the strontium and calcium cations and the second precipitate contains the residual strontium and calcium cations.

6. Process according to claim 2 characterised in that, for the superconductor phase Bi_{(2-y)}Sb_{y}Sr₂Ca₂Cu₃O_{10-y} with 0.3 < y < 0.8 said first precipitate contains all the bismuth, copper and antimony cations and the major part of the strontium and calcium cations and the second precipitate contains the residual strontium and calcium cations.

7. Process according to claim 1 characterised in that, for the superconductor phases:
- Bi₂Sr₂Ca₁Cu₂O₈,
- Bi₂Sr₂Ca₂Cu₃O₈,
optionally with lead or antimony substituted for some of the bismuth, using a starting solution of soluble salts in which said cations are in the stoichiometric proportions of the required phase, said first precipitation is carried out at a first pH value equal to at least 3 by adding an amine or ammonium oxalate, said first precipitate containing at least all of the strontium and calcium cations and the major part of the bismuth and copper, and said filtrate is then acidified by adding oxalic acid to obtain said second precipitate containing said residual cations.

8. Process according to claim 1 characterised in that said soluble salts are nitrates, acetates or formates.

## Patentansprüche

1. Verfahren zur Herstellung von Vorläufern supraleitender Keramiken mit hoher kritischer Temperatur durch Fällung von wasserunlöslichen Salzen, dadurch gekennzeichnet, daß es die folgenden Schritte aufweist:
- man geht von einer Lösung löslicher Salze aus, in denen die Kationen in stöchiometrischen Anteilen der gewünschten supraleitenden Phase vorliegen,
- man führt bei einem ersten pH-Wert eine erste vollständige Fällung einer ersten Serie von Kationen durch,
- man filtert die erste erhaltene Fällung, wäscht sie und behält das Filtrat zurück,
- man gibt dem pH-Wert dieses Filtrats einen zweiten Wert und läßt die verbleibenden Kationen ausfällen,
- man filtert die zweite Fällung,
- man homogenisiert die erste und die zweite Fällung,
- man trocknet das erhaltene Produkt, kalziniert und zermahlt es.

2. Verfahren nach Anspruch 1, dadurch gekennzeichnet, daß man von einer Lösung löslicher Salze ausgeht, bei der die Kationen in stöchiometrischen Anteilen der gewünschten supraleitenden Phase vorliegen, daß man die erste Fällung durch Hinzufügen von Ammonium- oder Aminoxalat mit einem ersten pH-Wert unterhalb oder gleich drei durchführt, daß man anschließend den pH-Wert des Filtrats auf einen zweiten Wert größer als 3 erhöht und daß man dann die verbleibenden Kationen vollständig in der Form von Oxalaten ausfällt.

3. Verfahren nach Anspruch 2, dadurch gekennzeichnet, daß für die supraleitenden Phasen
- Y₁Ba₂Cu₃O₇
- Y₁Ba₂Cu₄O₈
- Y₁₋ₓCaₓBa₂Cu₄O_{7,5-x} mit 0,05 < x < 0,15
- Y₂Ba₄Cu₇O₁₅
die erste Fällung die Gesamtheit der Yttrium- und Kupferkationen und den größten Teil der Bariumkationen und die zweite Fällung die verbleibenden Bariumkationen enthält.

4. Verfahren nach Anspruch 2, dadurch gekennzeichnet, daß für die supraleitenden Phasen
- Bi₂Sr₂Ca₁Cu₂O₈
- Bi₂Sr₂Ca₂Cu₃O₈ die erste Fällung die Gesamtheit der Wismut- und Kupferkationen und den größten Teil der Strontium- und Kalziumkationen enthält, während die zweite Fällung die verbleibenden Strontium- und Kalziumkationen enthält.

5. Verfahren nach Anspruch 2, dadurch gekennzeichnet, daß für die supraleitende Phase
Bi_{(2-y)}Pb_{y}Sr₂Ca₂Cu₃O_{10-y/2} mit 0,3 < y < 0,8
die erste Fällung die Gesamtheit der Wismut-, Kupfer und Bleikationen und den größten Teil der Strontium- und Kalziumkationen enthält, während die zweite Fällung die verbleibenden Strontium- und Kalziumkationen enthält.

6. Verfahren nach Anspruch 2, dadurch gekennzeichnet, daß für die supraleitende Phase
Bi_{(2-y)}Sb_{y}Sr₂Ca₂Cu₃O_{10-y} mit 0,3 < y < 0,8
die erste Fällung die Gesamtheit der Wismut-, Kupfer und Antimonkationen und den größten Teil der Strontium- und Kalziumkationen enthält, während die zweite Fällung die verbleibenden Strontium- und Kalziumkationen enthält.

7. Verfahren nach Anspruch 1, dadurch gekennzeichnet, daß für die supraleitenden Phasen
- Bi₂Sr₂Ca₁Cu₂O₈
- Bi₂Sr₂Ca₂Cu₃O₈
mit eventuell einem Ersatz einer gewissen Menge Wismut durch Blei oder Antimon, man von einer Lösung von löslichen Salzen ausgeht, in der die Kationen in stöchiometrischen Anteilen der gewünschten Phase vorliegen, daß man die erste Fällung bei einem ersten pH-Wert von mindestens gleich drei unter Hinzufügung von Ammonium- oder Aminoxalat durchführt, wobei die erste Fällung mindestens die Gesamtheit der Strontium- und Kalziumkationen und den größten Teil des Wismuts und des Kupfers enthält, und daß man dann das Filtrat durch Hinzufügen von Oxalsäure säuert, um die zweite Fällung mit den verbleibenden Kationen zu erhalten.

8. Verfahren nach einem der vorhergehenden Ansprüche, dadurch gekennzeichnet, daß die löslichen Salze Nitrate, Acetate oder Formiate sind.
